Europäisches Patentamt

European Patent Office

Office européen des brevets

(11) Publication number: **0 134 603**
**A2**

(12) # EUROPEAN PATENT APPLICATION

(21) Application number: **84201061.3**

(22) Date of filing: **16.07.84**

(51) Int. Cl.⁴: **A 01 C 17/00**

(30) Priority: **28.07.83 NL 8302688**

(43) Date of publication of application:
**20.03.85 Bulletin 85/12**

(84) Designated Contracting States:
**AT BE CH LI**

(71) Applicant: **C. van der Lely N.V.**
**Weverskade 10 P.O. Box 26**
**NL-3155 ZG Maasland(NL)**

(72) Inventor: **van der Lely, Ary**
**10 a Weverskade**
**Maasland(NL)**

(72) Inventor: **Bom, Cornelis Johannes Gerardus**
**16 Laan van Nieuw Rozenburg**
**Rozenburg(NL)**

(74) Representative: **Mulder, Herman et al,**
**Octrooibureau Van der Lely N.V. Weverskade 10 P.O. Box 26**
**NL-3155 ZG Maasland(NL)**

(54) Agricultural implement linkage.

(57) A spreader includes a lifting trestle (20) which is disposed between lower fastening members (12, 13) on a frame (1) of the spreader and lower lifting arms (44) of a tractor. The purpose is to support the implement in an elevated position for distributing fertilizer over standing crop. The lifting trestle (20) is movable relatively to the frame (1) to position the implement either closer to, or further from, the tractor.

EP 0 134 603 A2

./...

Croydon Printing Company Ltd.

FIG.1

-1-

## AN AGRICULTURAL IMPLEMENT

This invention relates to an agricultural implement, and particularly, although not exclusively, to an implement in the form of a spreader for spreading distributable material such as fertilizer.

An implement is known which comprises a frame provided with lower fastening members for coupling the implement with a lifting arm of a lifting device of a vehicle, the frame being connected at or near the fastening members to an upwardly extending lifting trestle which is provided with fastening members for coupling the trestle to the lifting arms for supporting the implement in an elevated position.

With implements of this kind, the lifting trestle is used to enable the implement to be used at a higher than usual level. For example, where the implement is a spreader for spreading material such as fertilizer, the lifting trestle is used when spreading fertilizer above standing crop which has already grown to an appreciable height.

According to the present invention, the lifting trestle is movable relatively to the frame and fixable selectively in any one of at least two different positions, whereby the fastening members of the frame are displaceable between two positions which are spaced apart in the direction of the

**0134603**

normal intended direction of operative travel of the implement.

Thus, when fastening the implement to the tractor or a similar vehicle using the lifting trestle, it can be positioned with respect to the tractor in either of these two spaced positions. In this way the implement can be brought into an optimum position with respect to the tractor. The implement can be mounted with respect to the tractor in a manner such that its centre of gravity is as near as possible to the tractor. Alternatively, the implement can be mounted so that, even in the elevated position of the implement, it cannot undesirably come into contact with parts of the tractor, which might cause damage to the implement or the tractor. Moreover, the implement can be moved into an optimum position with respect to other machinery with which the implement has to co-operate when two or more machines are coupled to the same tractor or similar vehicle.

An advantageous embodiment of the implement is obtained when the vertical distance between the fastening members of the lifting trestle and the fastening points between the lifting trestle and the frame is not less than about 0.7 times and not more than about 1.5 times the distance between the lower fastening members and upper fastening members of the frame. The upper fastening member of the frame may be adapted for attachment to the top rod of the three-point lifting device of a tractor.

The lifting trestle may be pivotally coupled with the frame. The displacement of the lifting trestle with respect to the frame can be advantageously performed when the lifting trestle is connected by means of at least one strut to the rear of the frame, the strut preferably being adjustable in length.

At least one of the lower fastening members of the frame may be adjustable upwardly and downwardly with respect to the frame and fixable selectively in one of at least two different positions relatively to the frame. In this way the spreader may be tilted with respect to the ground. This can be useful particularly where the implement is a spreader comprising distribution members which are rotatable about upwardly extending axes, for setting the distribution members in an inclined position relative to the surface to be covered. Thus the distribution pattern of the material in some circumstances can be varied.

The adjustable fastening member of the frame may be pivotally connected with the rest of the frame for movement about a pivotal axis which extends substantially horizontally and substantially transversely of the normal intended direction of operative travel of the implement.

For a better understanding of the present invention and to show how it may be carried into effect, reference will now be made, by way of example, to the accompanying drawings, in which:

Figure 1 is a side view of a spreader mounted on a tractor;

Figure 2 is a front view of the spreader taken in the direction of the arrow II in Figure 1;

Figure 3 shows the spreader of Figure 1 in a different position;

Figure 4 shows an alternative construction for part of the spreader;

Figure 5 shows another alternative construction for the part shown in Figure 4;

Figure 6 is a side view of part of the spreader similar to that of Figures 1 to 3, but showing a modification;

Figure 7 is a front view of a spreader having the modifications shown in Figure 6; and

Figure 8 shows the spreader of Figure 7 in a different position.

The spreaders illustrated in the drawings are intended for agricultural use for spreading distributable material such as fertilizer.

The spreader comprises a frame 1 provided with a hopper 2 and distribution members 3 and 4 disposed below the hopper. The distribution members 3 and 4 are coupled with drive gear 5 (not shown in detail) which includes an input shaft 6. The spreader also has a dosing arrangement 7 (not shown in detail) which comprises ports (not shown) in the hopper opening out above the distribution members 3 and 4.

At the front, the frame 1 has two mutually parallel, upwardly extending ports 8 and 9, the top ends of which are interconnected by a horizontal frame beam 10, to which the hopper is fastened. The front ends of a V-shaped horizontal lower beam 11 are fastened to the posts 8 and 9 near their lower ends. The limbs of the beam 11 converge from the beams 8 and 9 towards the rear and meet each other.

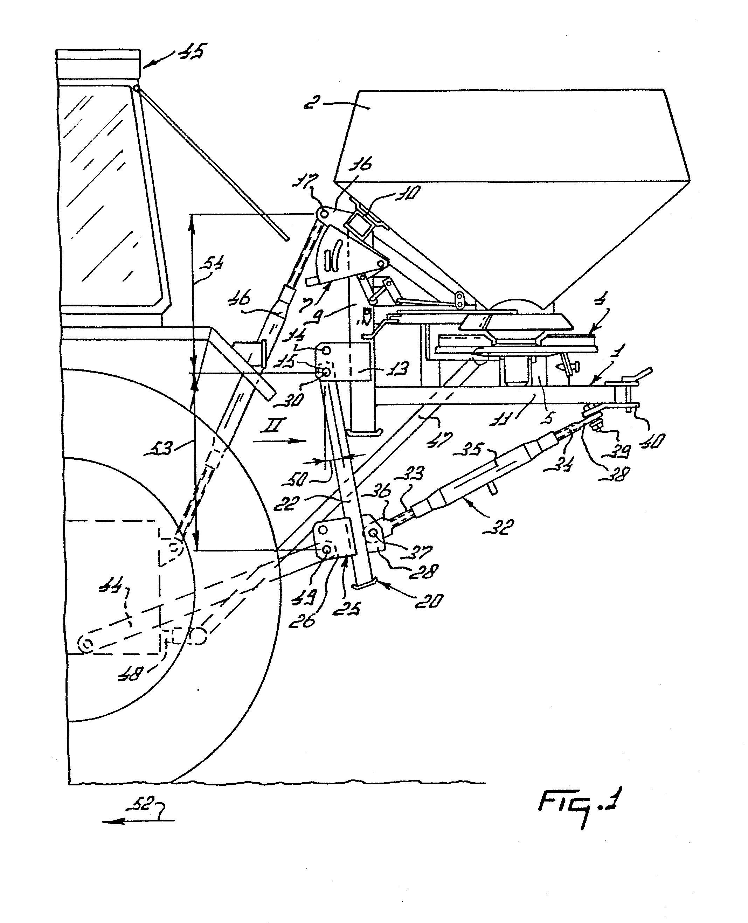

Slightly above the lower end of the post 8 there is a fastening member 12 which is in the form of two plates arranged one on each side of the post 8. The port 9 is provided in the same manner with a similar fastening member 13. The fastening members 12 and 13 are secured at the same height to the frame 1 and have aligned holes 14 and 15. In the middle of the machine the beam 10 is provided with a fastening member 16 comprising two strips mounted a short distance apart and having aligned holes 17. The spreader is provided with a lifting trestle 20 connected to the frame 1. The lifting trestle 20 comprises two upwardly extending supporting beams 21 and 22 which are interconnected by an intermediate beam 23, situated near the lower ends of the beams 21 and 22. A short distance above the lower ends of the supporting beams 21 and 22 there are fastening members 24 and 25. These fastening members each comprise plates 26 and 27 disposed one on each side of each beam 21 and 22. The plates 26 are on the outboard sides of the beams 21 and 22, and the plates 27 are on the inboard sides of the beams 21 and 22. The plates 26 and 27 project to the front of the beams 21 and 22 over equal distances. The plates 27 also project, as is shown in Figure 1, to the rear of the beams 21 and 22, the rearwardly projecting portions comprising supporting tongues 28. The supporting beams 21 and 22 are pivotally coupled at their top ends to the fastening members 12 and 13 by pivotal shafts 29 and 30. At its lower end, the lifting trestle 20 is coupled by struts 31 and 32 to the rear end of the horizontal beam 11 and heance to the rear end of the frame 1. Each of the struts 31 and 32 comprises a sleeve 25 and rods 33 and 34 constituting a turnbuckle. The rods 33 and 34 have opposite screwthreads and the sleeve 25 has corresponding internal screwthreads. The struts 31 and 32 are pivotally connected by pivot pins 37 with the tongues 28. the rods 33 and 34 are provided with tongues 38, which are pivotally coupled by pivot pins 39 to a plate 40 fastened to the horizontal beam 11. The lengths of the struts 31 and 32 between the tongues 36 and 38 can be adjusted by turning the sleeves 35 with respect to the screwthreaded rods 33 and 34, which thus penetrate into the sleeve 35 to a greater or lesser extent.

In use of the spreader, it is coupled with the lifting device of a tractor 45 by connecting ends of lifting arms 44 of the lifting device between the plates 26 and 27 of the fastening members 24 and 25. The fastening member 16 is then coupled with a top rod 46 of the lifting device. An auxiliary shaft 47 connects the input shaft 6 to the power take-off shaft of the tractor.

The spreader shown is used to spread distributable material, in particular granular and/or powdery material, for example fertilizer. During travel of the spreader across the surface to be covered, for example a field to be fertilized, the material is carried in the hopper 2 and is fed at a desired rate from the hopper through the dosing members 7 (not shown in detail) to the distribution members 3 and 4. The distribution members 3 and 4 are rotated during operation from the power take-off shaft 48 of the tractor through the auxiliary shaft 46 and the input shaft 6. The drive train is such that the distribution members 3 and 4 rotate in opposite senses about their upwardly extending rotary axes, the proximal sides of the distribution members moving in the intended direction 52 of operative travel of the spreader. The construction of the distribution members 3 and 4, their directions of rotation and the positions of the outlet ports of the hopper are chosen so that during operation of the spreader the two distribution members 3 and 4 spread the material symmetrically with respect to the central vertical plane 63. The plane 63 contains the longitudinal centreline of the spreader, the spreader being substantially symmetrical about the plane 63. Each of the distribution members spreads the material mainly to the rear over a width extending practically equally to both sides of the spreader. Thus the material is spread by each of the distribution members 3 and 4 over substantially the whole working width of the spreader so that the spreading sectors of the two distribution members overlap each other practically completely. The spreader is particularly suitable for spreading, for example, fertilizer on standing crop of considerable height. The distribution members 3 and 4 can be held by the lifting trestle, for example, at a distance of 1.50 ms above the ground. The material can thus be spread on standing crop at least one metre high.

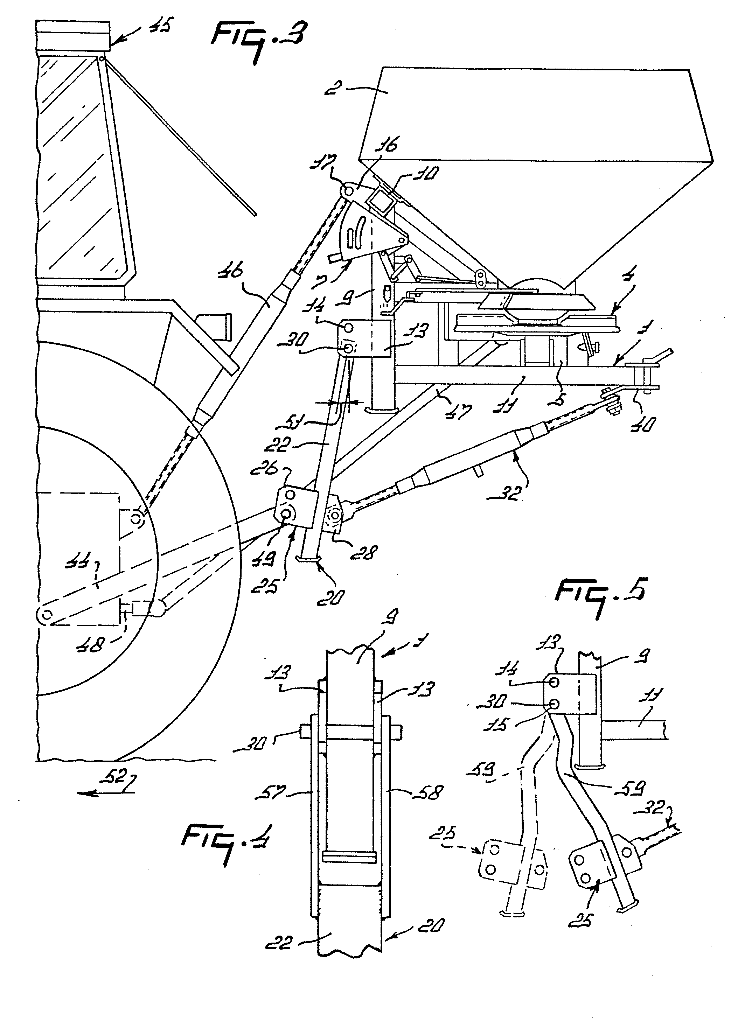

The lifting trestle 20 is pivotable with respect to the frame 1 about a horizontal axis extending normal to the direction 52 and embodied by the aligned pins 29 and 30, by which the trestle is secured to the fastening members 12 and 13. The pivotal movement of the trestle with respect to the frame 1 can be effected by adjusting the length of the struts 31 and 32 by turning the sleeve 35 with respect to the screw spindles 33 and 34. By lengthening the struts 31 and 32, the lifting trestle 20 can turn with respect to the frame 1 about the pins 29 and 30 so that it moves forwardly with respect to the frame 1 and can take up a position as shown, by way of example, in Figure 3. If the position of the lifting arms 44 is maintained, the spreader will move to the rear with respect to the pins 49 by which the fastening arms 24 and 25 are coupled with the lifting arms 44. The supporting beams 21 and 22, which, in Figure 1, slope to the rear from top to bottom at an angle 50 of about 10° to the vertical posts 8 and 9, which themselves are perpendicular to the distribution members 3 and 4 parallel to the rotary axes of the distribution members 3 and 4, move to a position in which, as shown in Figure 3, they slope to the front from top to bottom, at an angle 51 of about 10° to the posts 8 and 9. The lifting trestle 22 has then turned through 20° about the shafts 29, 30 with respect to the frame 1. It will be obvious that the angular position of the lifting trestle 22 with respect to the frame 1 can be fixed selectively in any one of a plurality of positions by lengthening or shortening the struts 31 and 32. By turning the lifting trestle 20 with respect to the frame 1 about the pivotal axis formed by the pins 29 and 30, the spreader comprising the frame 1 and the distribution members 3 and 4 can thus be displaced in a direction parallel to the direction 52 with respect to the tractor to a greater or lesser extent. Thus the spreader can be optionally positioned closer to or further from the tractor. By moving the spreader with respect to the tractor 45 in the direction 52, the centre of gravity of the spreader is also displaced in that direction with respect to the tractor. Thus, for example, when the spreader is held in a high position by the lifting trestle and when the tractor is relatively small, it may be advantageous for the spreader to be as near to the tractor as possible. To this end the lifting trestle can be turned to the rear as far as possible with respect to the frame 1. The angle 50 is then set at its maximum value.

In other circumstances, it may be important for the spreader to be displaced with respect to the tractor in the direction 52 in order to avoid the spreader coming into undesirable contact with parts of the tractor, which might damage the spreader and/or the tractor. Because of the relatively great length of the trestle 20 between the pins 29 and 30 on the one hand and the pins 49 on the other, displacement of the spreader with respect to the tractor in the direction 52 can be carried out without any significant change in the height of the spreader and hence of the distribution members 3 and 4 above the ground. The vertical distance 53 between the pins 29, 30 and the pins 49 is in the illustrated embodiment slightly larger than the distance 54 between the holes 15 and the holes 17 of the fastening members 12 and 13 and 16 respectively. Preferably the distance 53 is not less than 0.7 times the distance 54 and not more than about 1.5 times the distance 54.

It will be clear that the height of the spreader with the distribution members 3 and 4 above the ground can also be varied by moving the lifting arms 44 upwardly or downwardly. The lifting trestle 20, therefore, serves to support the spreader at a considerable height above the ground and to displace the spreader parallel to the direction 52 by turning the trestle with respect to the frame 1. In order to maintain the horizontal position of the distribution members 3 and 4, i.e. to keep them parallel to the ground, the length of the top rod 46 can be adjusted. The length of the struts 31 and 32 may be adjusted so that the trestle 20 can turn through an angle of at least 10° to either side of the vertical about the pivotal axis formed by the pins 29 and 30. During this movement the height of the distribution members 3 and 4 above the ground will hardly change owing to the relatively great length 53, whilst nevertheless a significant fore-and-aft displacement of the spreader can be achieved.

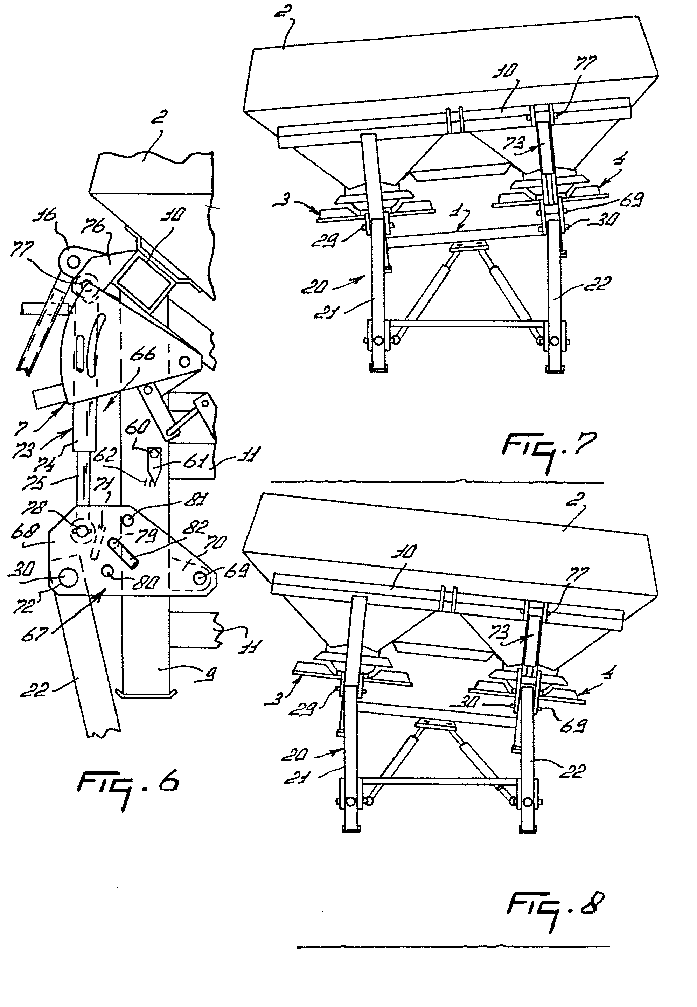

It will be clear that the permissible range of movement of the trestle 20 of the frame 1 may be other than 10° in each direction, as given above for the angles 50 and 51. In order to enable a larger turn of the trestle 20 with respect to the frame 1 to the rear than is shown in Figure 1 the top ends of the beams 21, 22 may be provided with relatively spaced plates 57 and 58 as shown in Figure 4. These plates can be fitted on the outer sides of the plates 27 and 26 so as to be pivotable with respect to the plates 27 and 26 by means of the pivotal pins 29 and 30 shown in the preceding embodiment. The distance between the plates 57 and 58 is such that they can move past the posts 8 and 9 on both sides so that the desired angular turn of the lifting trestle 20 may take place to the rear with respect to the frame. In an alternative shown in Figure 5, the beams 21 and 22 may have a sharp bend 59 so that the trestle can turn further before the beams 21 and 22 come into contact with the lower ends of the posts 8 and 9. Obviously, for example, the lower ends of the beams 9 may alternatively be bent towards the rear. However, the illustrated spreader, mainly comprising the frame 1, the hopper 2 and the distribution members 3 and 4 is a model of an existing spreader to which the lifting trestle has been fastened without the need for further alterations.

The spreader comprising the frame 1, the hopper 2 and the distribution members 3 and 4 may also be used without the lifting trestle 20. The trestle can be detached from the frame 1 by loosening the struts 31 and 32 from the plate 40 and the top ends of the beams 21 and 22 from the fastening members 12 and 13. The spreader can then be coupled with the lifting device without the lifting trestle, the lifting arms 44 then being coupled by means of the pins 29 and 30 with the fastening members 12 and 13. The top rod remains coupled to the fastening members 16, but will be considerably shorter. The input shaft 6 would also need to be coupled to the power take-off shaft 48 by a shorter auxiliary shaft 47 so that the spreader can be used with the distribution members 3 and 4 at a much lower height above the ground. The spreader is then suitable for spreading material, for example fertilizer, on the ground with the distribution members 3 and 4 at about 60 cms above the ground.

Although the invention has been described with reference to a spreader comprising rotatable distribution members 3 and 4, the principle of the invention, i.e. the use of a lifting trestle displaceably fitted to an agricultural implement, can also be applied to agricultural devices other than the spreader shown. The lifting trestle 20 can, in general, be used to put any agricultural implement or part thereof in a considerably higher position and to position it with respect to the tractor optionally in any one of two or more positions spaced from each other in the direction 52.

The connection of the top ends of the beams 21 and 22 with the fastening members 12 and 13 and the coupling of the lifting trestle 20, through the struts 31 and 32 attached near the lower ends of the beams 21 and 22, to the rear end of the beam 11 provide a strong construction. Consequently, the spreader may have a relatively large hopper and may be relatively heavy when the hopper is full.

In order to enable the distribution members 3 and 4 to be put into a desired position, for example at a particular angle to the horizontal when the lifting trestle 20 is turned about the pivotal axis of the pins 29 and 30, the frame beam 9 is provided with a pointer 61. The pointer 61 is freely movable about a horizontal pivotal shaft 60 along a scale 62. The position of the pointer 61 with respect to the scale 62 indicates the attitude of the distribution members 3 and 4 with respect to the horizontal. The distribution members can then be adjusted simply by altering the length of the top rod 46 after the spreader has been moved to the desired height.

Figures 6, 7 and 8 show a different construction for part of the spreader shown in Figures 1, 2 and 3, in which the fastening member 13 of Figures 1, 2 and 3 is replaced by a tilting mechanism 66. This mechanism 66 is shown in Figure 6 in a side view corresponding to that of Figure 1. The tilting mechanism 66 comprises a fastening member 67 made up of two plates 68 disposed one on each side of the post 9 and rigidly secured to each other by a tie strip 71. The fastening member 67 is pivotable with respect to the post 9 about a pivotal shaft 69. The shaft 69 is mounted on the rear of the post 9 by means of supporting lugs 70. The fastening member 67 has holes 72 corresponding to the holes 15 which enable the top end of the supporting beam 22 of the lifting trestle 20 to be fastened to the member 67 by means of a pin 30, in a manner analogous to the connection of the beam 22 to the fastening member 13 in the preceding embodiment . The tilting mechanism 66 also comprises a lifting member 73, which in this embodiment is a hydraulic lifting member comprising a cylinder 74 and a piston rod 75. The lifting member 73 is pivotally fastened by means of a pivotal shaft 77 to tongues 76 on the beam 10. The lower end of the rod 75 of the lifting member 73 is pivotally connected between the plates 68 by means of a pivotal shaft 78. The plates 68 of the fastening member 67 have aligned holes 79, 80 and 81, the holes 80 and 81 being situated at equal distances on opposite sides of the hole 79. The hole 79 can thus be termed a middle hole, and the holes 80 and 81 can be termed lower and upper holes respectively. A pin 82 can be inserted selectively into any one of the holes 79, 80 or 81 as indicated in Figure 6, where the stop pin 82 is shown in the middle hole 79. The pin 82 extends through the aligned holes 79 in the two plates 68 on both sides of the post 9.

When using the device it is coupled with the lifting device of a tractor in the same manner as shown in Figures 1 to 5.

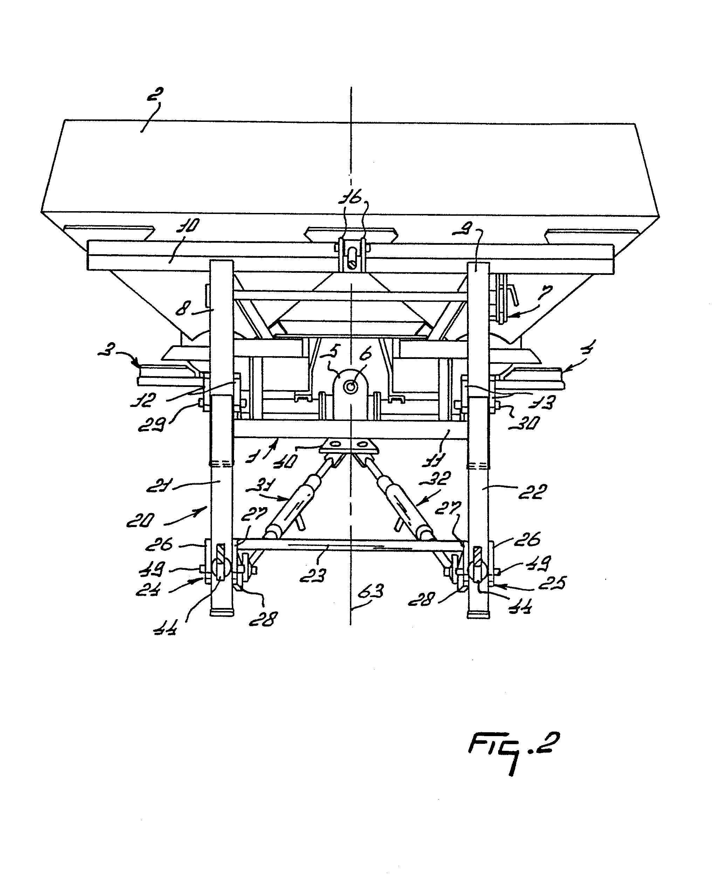

The lifting trestle can be set in the desired position relative to the frame 1 by means of the struts 31 and 32 in the manner described above. Referring to Figure 6, the beam 22 and hence the lifting trestle 20 is in a position relative to the frame 1 corresponding to Figure 1. When the locking pin 82 is located in the middle hole 79, the spreader is held in a position corresponding to that shown in Figures 1 and 2, in which the distribution members 3 and 4 and the beam 10 are parallel to the ground, but the position of the fastening member 67 relative to the frame 1 can be altered as follows. By operating the lifting member 73, the fastening member 67 can be turned about the pivotal shaft 69 with respect to the frame 1. In the position shown in Figure 6, the pin 30, the lifting trestle 20 and the lifting arms 44 are held stationary, and the weight of the spreader is transferred through the pivotal shaft 69 to the fastening members 67. Under the weight of the spreader, the pivotal shaft 69 tends to move downwards with respect to the pin 30 so that the fastening member 67 tends to turn about the shaft 69 and the pin 30. This is prevented by the stop pin 82 inserted through the middle hole 79 and bearing on the front of the post 9 or on a stop provided thereon. In this way the position of the fastening member 67 is established.

By subjecting the lifting member 73, which may be connected through ducts (not shown) with the hydraulic circuit of the tractor, to a pressure such that the rod 75 is extended from the cylinder 74, the pivotal shaft 78 is moved downwardly. As a result, the fastening member 67 will turn downwards about the pivotal shaft 69 so that the pin 82 moves out of contact with the post 9 and can be removed from the middle hole 79. The fastening member 67 can be turned downwards about the pin 69 by the lifting member 73 until the upper hole 81 is in front of the post 9, and the pin 82 can then be inserted into the upper hole 81. The pressure in the lifting member 73 can then be relieved, the pin 82 in the hole 81 preventing the fastening member 67 from turning upwards about the pivotal shaft 59. The pivotal shaft 69 and hence the spreader have thus been moved upwards with respect to the pin 30, but the fastening member 12 (Figure 2) at the top end of the beam 21 of the trestle remains at the same height so that the spreader will occupy an inclined position as shown in Figure 7. In this position the distribution members 3 and 4 are inclined to the ground laterally of the direction 52. They are inclined downwardly to the right. This position may be used for spreading material near the edge of a field to the right over a smaller distance. The material is uniformly distributed over this smaller distance. Tilting of the distribution members is such that the distribution to the left-hand side of the spreader remains practically unchanged. The material spread to the left-hand side is overlapped at least partly during the next run so that a uniform distribution of the material is obtained over this area in the normal manner. The material spread over an edge strip of the field on the right-hand side will, however, not be overlapped by a spreading run made further to the right-hand side. It is, therefore, necessary to distribute the material uniformly over the whole width of this edge strip in a single pass. When, viewed in the direction 52, the material has to be spread on a left-hand side strip of the field to be covered, the spreader can be tilted downwards to the left as is indicated in Figure 8. In order to achieve this position, the lifting member 73 is again pressurised by pressing fluid into the cylinder 74 so that the rod 75 is extended. The stop pin 81 is released from its contact with the front of the post 9 and the pin 82 can be removed from the hole 81. The pressure is then relieved so that the distance between the pivotal shafts 77 and 78 is shortened by expelling fluid from the cylinder 74 under the weight of the spreader. Shortening the distance between the shafts 77 and 78 below a given value is prevented by inserting the pin 82 into the lower holes 80 of the plates 68. When the spreader moves down and the fastening member 67 turns about the pivotal shaft 69, the pin 82 inserted into the holes 80 will thus make contact with the stop formed by the post 9. Further upward turning of the fastening member 67 about the pin 69 is thus avoided. The spreader then occupies the position shown in Figure 8. The distance between the holes 79 and 80, and 79, 81 respectively is chosen so that the desired inclined positions can be obtained on each side of the level position. During tilting, the spreader will turn slightly with respect to the top ends of the supporting beams 21 and 22 of the trestle 20. This pivotal movement may be permitted by the clearance between the coupling pins 29 and 30 and the holes 14 and 72. The struts 31 and 32 may change their position slightly due to the clearance of the shafts 37 and 39 in their holes. Any shortening or lengthening of the struts 31 and 32 may change their position slightly due to the clearance of the shafts 37 and 39 in their holes. Any shortening or lengthening of the struts between the supporting lugs 28 and the plate 40 which might be necessitated by the tilting can be achieved by turning the sleeves 35. The arrangement shown of the struts 31 and 32 between the lugs 28 and the plate 40 is, therefore, advantageous in obtaining the desired tilting of the spreader with respect to the lifting trestle 20, which position is particularly used for spreading fertilizer above standing crop already fairly high above the ground.

Although in the embodiment shown in Figures 6, 7 and 8 there is a tilting mechanism 66 on only one side of the spreader for moving the spreader on one side into at least three positions determined by the holes 79, 80 and 81, it is also possible to provide a tilting mechanism on both sides of the spreader in the same manner as described for the tilting mechanism 66 of Figures 6, 7 and 8. In this case each tilting mechanism needs to have only two possible positions relative to the frame of the spreader in order to obtain the two oppositely inclined positions of Figures 7 and 8. The plates 68 of the fastening members then need only two holes 80 and 79 or 79 and 81. Nevertheless, in each of the tilting mechanisms on both sides three or more holes may be provided in the fastening members concerned in order to obtain a plurality of different inclined positions of the spreader with respect to the lifting trestle and hence to the surface to be covered.

As stated above with respect to the preceding embodiment, the device shown in Figures 6, 7 and 8 may also be employed without the trestle 20 on the frame 1 of the spreader. The fastening members 12 and 67 would then be coupled to the lifting arms 44 of the lifting device, and the top rod 46 would be coupled to the fastening member 16. The tilting mechanism 66 could still be used to tilt the spreader to the left or to the right as shown in Figure 7 and 8. This tilting would, however, take place with the distribution members 3 and 4 at a smaller distance above the ground.

Whilst various features of the spreaders that have been described, and that are illustrated in the drawings, will be set forth in the following claims as inventive features, it is to be noted that the invention is not necessarily limited to these features and that it encompasses all of the features that have been described both individually and in various combinations.

CLAIMS

1. An agricultural implement comprising a frame (1) provided with lower fastening members (12, 13) for coupling the implement to lifting arms (44) of a lifting device of a vehicle (45), the frame (1) being connected at a position at or near the fastening members (12, 13) to an upwardly extending lifting trestle (20) which is provided with fastening members (24, 25) for coupling the trestle (20) to the lifting arms (44) to support the implement in an elevated position, characterized in that the lifting trestle (20) is movable relatively to the frame (1) and fixable selectively in any one of at least two different positions, whereby the fastening members (12, 13) of the frame (1) are displaceable between two positions which are spaced apart in the direction of the normal intended direction (52) of operative travel of the implement.

2. An implement as claimed in claim 1 characterized in that the frame (1) is provided with an upper fastening member (16) and in that the fastening members (29, 25) of the lifting trestle (20) are vertically spaced from fastening points (30) at which the trestle (20) is connected to the fastening members (12, 13) of the frame (1) by a distance (53) which is not less than 0.7 times and not more than about 1.5 times the vertical distance (54) between the lower fastening members (12,13) of the frame (1) and the upper fastening member (16) of the frame (1).

3. An implement as claimed in claim 2, characterized in that the vertical distance (53) between the fastening members (24, 25) of the lifting trestle (20) and the fastening points (30) is about 55 cms.

4. An implement as claimed in any one of the preceding claims, characterized in that the lifting trestle (20) is pivotally coupled with the frame (1).

5. An implement as claimed in claim 4, characterized in that the axis of the pivotal connection between the lifting trestle (20) and the frame (1) extends substantially horizontally, when the implement is upright, and substantially normal to the normal intended direction (52) of operative travel of the implement.

6. An implement as claimed in any one of the preceding claims, characterized in that the lifting trestle (20) is secured to the fastening members (12, 13) of the frame.

7. An implement as claimed in any one of the preceding claims, characterized in that the lifting trestle (20) comprises two upwardly extending supporting beams (21, 22), which are coupled with one another and are connected at their top ends with the frame (1), the lifting trestle (20) being further connected by at least one strut (31, 32) to the rear of the frame (1).

8. An implement as claimed in claim 7, characterized in that the supporting beams (21, 22) are spaced apart by a distance which is substantially equal to the distance between the lower fastening members (12, 13) of the frame (1).

9. An implement as claimed in claim 7 or 8, characterized in that the or each strut (31, 32) is pivotally coupled with the frame (1) and with the lifting trestle (20).

10. An implement as claimed in any one of claims 7 to 9, characterized in that the length of the or each strut (31, 32) is adjustable.

11. An implement as claimed in claim 10, characterized in that the or each strut (31,32) comprises a sleeve (35) with internal screwthreads receiving spindles (33,34) which have screwthreads of opposite pitch and are connected with the frame (1) and with the lifting trestle (20) respectively.

12. An implement as claimed in any one of claims 7 to 11, characterized in that the lifting trestle (20) is connected to the frame (1) by means of two struts (31,32) which are each connected at one end to a respective one of the supporting beams (21, 22) and are spaced apart at that end by a distance which is substantially equal to the distance between the fastening members (12, 13) of the frame (1), the other end of each strut (31, 32) being connected to the frame near the middle of the frame, as viewed in the direction (52) of normal intended operative travel of the implement.

13. An implement as claimed in any one of the preceding claims, characterized in that each fastening member (12, 13) of the frame (1) comprises two horizontally spaced supporting plates to which the lifting trestle (20) is fastened.

14. An implement as claimed in claim 13, when appendant to claim 7, characterized in that the supporting beams (21, 22) of the lifting trestle (20) are pivotally mounted between the plates.

15. An implement as claimed in claim 13 when appendant to claim 7, or in claim 14, characterized in that, as viewed from the side, the supporting beams (21, 22) of the lifting trestle (20) have a sharp bend (59).

16. An implement as claimed in claim 13 when appendant to claim 7, or in claim 14, characterized in that the supporting beams (21, 22) are provided at their top ends with spaced plates (57, 58) which are pivotally connected to the frame on opposite sides of the plates of the fastening members (12, 13) of the frame (1), the plates (57, 58) having a height such that these plates are movable along vertical posts (8, 9) of the frame (1) when the lifting trestle (20) is turning about its pivotal shaft with respect to the frame (1).

17. An implement as claimed in any one of the preceding claims, characterized in that at least one (67) of the fastening members of the frame (1) is upwardly and downwardly adjustable with respect to the frame (1) and is fixable in any one of at least two different positions with respect to the frame (1).

18. An implement as claimed in claim 17, characterized in that the adjustable fastening member (67) is pivotally connected to the frame (1) for movement about a pivotal axis (69) extending substantially horizontally and substantially transversely of the normal intended direction (52) of operative travel of the implement.

19. An implement as claimed in claim 18, characterized in that, with respect to the normal intended direction (52) of operative travel, the pivotal axis (69) is to the rear of an upwardly extending post (9) of the frame (1).

20. An implement as claimed in any one of claims 17 to 19, characterized in that the adjustable fastening member (67) has at least two holes (79, 80, 81), into any one of which a stop pin (82) can be selectively inserted for retaining the fastening member (67) at different heights with respect to the frame (1).

21. An implement as claimed in any one of claims 17 to 20, characterized in that the adjustable fastening member (67) is connected with a lifting member (73).

22. An implement as claimed in claim 21, characterized in that the lifting member (73) is an upwardly extending hydraulically actuable member fastened at one end to the adjustable fastening member (67) and at the other end to the frame (1).

-22-

23. An implement as claimed in any one of claims 21 or 22 when appendant to claim 20, characterized in that the adjustable fastening member (67) comprises two relatively spaced plates (68) disposed on opposite sides of a post (9) of the frame (1), between which plates (68) one end of the lifting member (73) is pivotally mounted, each of the plates (68) having the holes (79, 80, 81) which are respectively aligned with each other, whereby the stop pin (82) can be passed through two aligned holes for retaining the fastneing member (67) in one of its positions with respect to the frame (1).

24. An implement as claimed in any one of the preceding claims, which is a spreader for distributable material.

25. A lifting trestle for use in an implement in accordance with any one of the preceding claims.

FIG.1

FIG.2

FIG.3

FIG.5

FIG.4

FIG.7

FIG.6

FIG.8